# EUROPEAN PATENT APPLICATION

(11) **EP 4 379 004 A1**
(43) Date of publication of application: **05.06.2024**
(21) Application number: 22849112.2
(22) Date of filing: 27.06.2022
(51) Int. Cl.: C08L 83/08, C08K 3/08, C08K 3/36, C08K 9/06, C08L 83/05

(54) **LIQUID-ADDITION-CURABLE FLUOROSILICONE COMPOSITION, SILICONE RUBBER, AND MOLDED ARTICLE**

(30) Priority: 29.07.2021 JP 2021124358
(71) Applicant: SHIN-ETSU CHEMICAL CO., LTD., Tokyo 1000005 (JP)
(72) Inventor: SHUDO Shigeki, Annaka-shi, Gunma 379-0224 (JP); KATO Nobu, Annaka-shi, Gunma 379-0224 (JP); HARA Tatsuei, Annaka-shi, Gunma 379-0224 (JP); OGURA Kentaro, Annaka-shi, Gunma 379-0224 (JP)
(74) Representative: Cabinet Nony
(86) International application number: PCT/JP2022/025551
(87) International publication number: WO 2023/008042

(57) **Abstract**

[Problem]

One of the objects of the present invention is to provide a liquid addition-curable fluorosilicone composition that has a low compression set value after heating and curing, retains mechanical strength, and in particular, is suitably applied to injection molding. Further, the object of the present invention is to provide a fluorosilicone rubber obtained by heating and curing aforesaid composition, and a molded article of the fluorosilicone rubber.

[Solution]

An addition-curable fluorosilicone composition in a form of liquid at 23 °C, comprises
(A) an organopolysiloxane represented by the following general formula (1) and having a viscosity at 25 °C of 100 to 500,000 mPa·s, 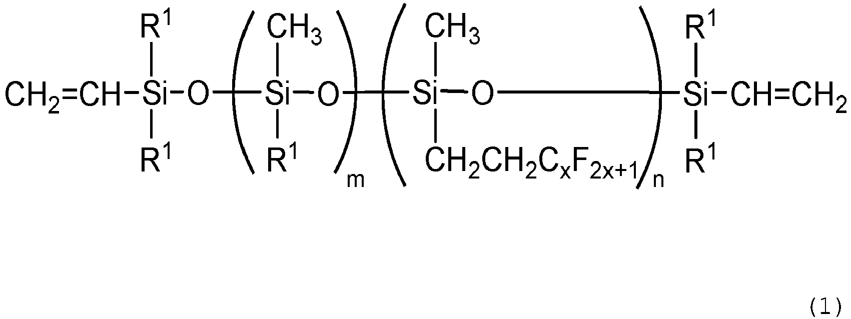 wherein R¹ is, independently of each other, a group selected from the group consisting of an alkyl group having 1 to 8 carbon atoms, an aryl group having 6 to 12 carbon atoms, and an aralkyl group having 7 to 12 carbon atoms, x is an integer of 1 to 10, m is an integer of 0 to 100, and n is an integer of 1 to 800, provided that 5 <= m + n <= 800;
(B) an organohydrogenpolysiloxane having two or more hydrogen atoms each bonded to a silicon atom per one molecule, in an amount such that the number of hydrogen atoms bonded to a silicon atom in Component (B) is 0.5 to 10, per one vinyl group bonded to a silicon atom in Component (A);
(C) an addition-reaction catalyst in a catalytic amount; and
(D) a reinforcing silica filler agent, a surface of which being treated with an organosilicon compound represented by the following general formula (2): 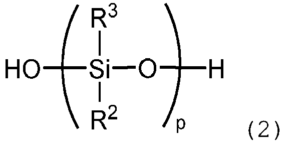 wherein R³ is, independently of each other, a group selected from the group consisting of an alkyl group having 1 to 8 carbon atoms, an aryl group having 6 to 12 carbon atoms, and an aralkyl group having 7 to 12 carbon atoms, R² is, independently of each other, a group defined for R³ or a 3,3,3-trifluoropropyl group, provided that at least one R² is a 3,3,3-trifluoropropyl group, and p is an integer that satisfies equation 1 <= p <= 20, in an amount of 10 to 60 parts by mass, relative to 100 parts by mass of Component (A).

## Description

### TECHNICAL FIELD

The present invention relates to a liquid addition-curable fluorosilicone composition, a fluorosilicone rubber obtained by heating and curing the composition, and a molded article of the fluorosilicone rubber.

### BACKGROUND OF THE INVENTION

Conventionally, since addition-curable fluorosilicone rubber compositions have excellent gasoline and oil resistance, they have come to be used as rubber parts for aircrafts and on vehicles, printer parts, and the like (Patent Literature 1). Further, in recent years, they have been considered for mobile parts due to their sebum resistance and for seal parts for fuel cell vehicles due to their acid resistance. Addition-curable fluorosilicone rubber compositions used for these parts are required to have a low compression set and retain practical strength, i.e., mechanical strength. In particular, there has been a demand for the development of liquid addition-curable fluorosilicone rubber compositions offering excellent productivity. Processing methods with excellent productivity are preferably cast molding, compression molding, injection molding, and the like that use molds. There was a problem in that liquid addition-curable fluorosilicone rubber compositions could not be used unless they had a viscosity applicable to those processing methods.

### PRIOR LITERATURE

### PATENT LITERATURE

Patent Literature 1: Japanese Patent Application Laid-Open No. 2013-047290

### DISCLOSURE OF THE INVENTION

### PROBLEMS TO BE SOLVED BY THE INVENTION

The present invention was made in view of the circumstances, and one of the objects of the present invention is to provide a liquid addition-curable fluorosilicone composition that has a low compression set value after heating and curing, retains mechanical strength, and in particular, is suitably applied to injection molding. Further, the object of the present invention is to provide a fluorosilicone rubber obtained by heating and curing aforesaid composition, and a molded article of the fluorosilicone rubber.

The fluorosilicone composition set as the object in the present invention comprises, as a main agent forming the silicone rubber matrix after curing, a linear polysiloxane having a repeating structure of diorganosiloxane units including a fluoroalkyl group as a main chain. On the other hand, general dimethyl silicone compositions comprise, as a main agent, a linear dimethylpolysiloxane with a main chain composed of repeating dimethylsiloxane units. In this respect, the fluorosilicone composition set as the object in the present invention is essentially different from such dimethyl silicone compositions.

### SOLUTIONS TO THE PROBLEMS

As a result of repeated intensive study to achieve the object, the present inventors have found that an addition-curable fluorosilicone composition that is liquid at 23 °C comprising a reinforcing silica filler agent, a surface of which being treated with an organosilicon compound having a trifluoropropyl group provides a fluorosilicone rubber having a low compression set value after heating and curing, and that retains mechanical strength. Further, the present inventors have found that the liquid addition-curable fluorosilicone composition is suitable as a material for cast molding, compression molding, and injection molding, thereby arriving at achieving the present invention.

That is, the present invention provides an addition-curable fluorosilicone composition in a form of liquid at 23 °C and comprises (A) an organopolysiloxane represented by the following general formula (1) and having a viscosity at 25 °C of 100 to 500,000 mPa·s, 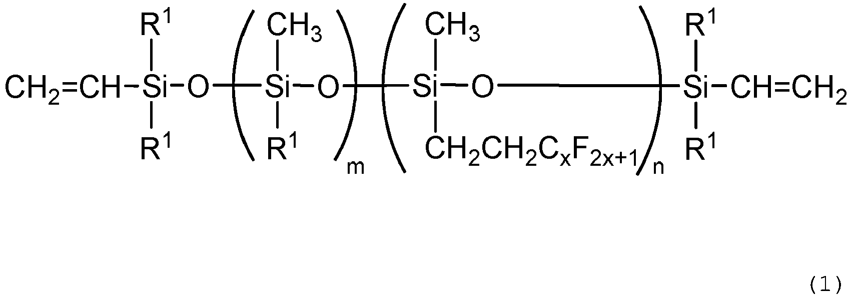 wherein R¹ is, independently of each other, a group selected from the group consisting of an alkyl group having 1 to 8 carbon atoms, an aryl group having 6 to 12 carbon atoms, and an aralkyl group having 7 to 12 carbon atoms, x is an integer of 1 to 10, m is an integer of 0 to 100, and n is an integer of 1 to 800, provided that 5 <= m + n <= 800; (B) an organohydrogenpolysiloxane having two or more hydrogen atoms each bonded to a silicon atom per one molecule, in an amount such that the number of hydrogen atoms bonded to a silicon atom in Component (B) is 0.5 to 10, per one vinyl group bonded to a silicon atom in Component (A);
(C) an addition-reaction catalyst in a catalytic amount; and
(D) a reinforcing silica filler agent, a surface of which being treated with an organosilicon compound represented by the following general formula (2): 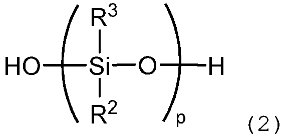
wherein R³ is, independently of each other, a group selected from the group consisting of an alkyl group having 1 to 8 carbon atoms, an aryl group having 6 to 12 carbon atoms, and an aralkyl group having 7 to 12 carbon atoms, R² is, independently of each other, a group defined for R³ or a 3,3,3-trifluoropropyl group, provided that at least one R² is a 3,3,3-trifluoropropyl group, and p is an integer that satisfies equation 1 <= p <= 20, in an amount of 10 to 60 parts by mass, relative to 100 parts by mass of Component (A).

Further, the present invention provides a fluorosilicone rubber that is a cured product of the liquid addition-curable fluorosilicone composition and a molded article of the silicone rubber.

### EFFECTS OF THE INVENTION

The liquid addition-curable fluorosilicone composition of the present invention provides a fluorosilicone rubber that has a low compression set value after heating and curing and retains mechanical strength. The liquid addition-curable fluorosilicone composition is suitable as a material for cast molding, compression molding, and injection molding, and thus contributes to improve productivity of molded articles.

### DETAILED DESCRIPTION OF THE INVENTION

The present invention will be described in more detail below.

### (A) Vinyl group-containing organopolysiloxane

Component (A) is an organopolysiloxane represented by the following general formula (1) and having a viscosity at 25 °C of 100 to 500,000 mPa·s. 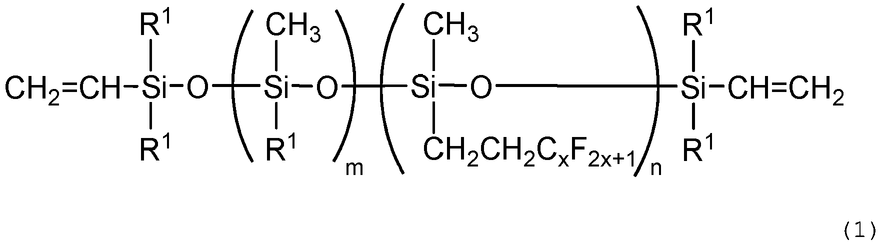 wherein R¹ is, independently of each other, a group selected from the group consisting of an alkyl group having 1 to 8 carbon atoms, an aryl group having 6 to 12 carbon atoms, and an aralkyl group having 7 to 12 carbon atoms, x is an integer of 1 to 10, m is an integer of 0 to 100, and n is an integer of 1 to 800, provided that 5 <= m + n <= 800.

In the formula (1), R¹ is, independently of each other, a group selected from the group consisting of an alkyl group having 1 to 8 carbon atoms, such as a methyl, ethyl, propyl, isopropyl, butyl, isobutyl, tert-butyl, hexyl, or cyclohexyl group; an aryl group having 6 to 12 carbon atoms, such as a phenyl or tolyl group; and an aralkyl group having 7 to 12 carbon atoms, such as a benzyl group. Preferred among these are an alkyl group having 1 to 8 carbon atoms, and particularly preferred is a methyl group.

m is an integer of 0 to 100, preferably 0 to 50, more preferably 0 to 30, even more preferably 0 to 20, and most preferably an integer of 0 to 10. n is an integer of 1 to 800, preferably an integer of 5 to 750, more preferably an integer of 10 to 650, even more preferably an integer of 50 to 650, and most preferably an integer of 100 to 650. This is provided that a total of m and n is a number satisfying equations 5 <= m + n <= 800, preferably 10 <= m + n <= 680, more preferably 60 <= m + n <= 680, and even more preferably 120 <= m + n <= 680. x is an integer of 1 to 10, preferably 1 to 3, and most preferably 1.

The viscosity at 25 °C of the organopolysiloxane (A) is characteristically a value within the range of 100 to 500,000 mPa·s, and preferably within the range of 300 to 100,000 mPa·s. Within this range, the cured product has good physical properties and, further, handling workability of the composition is good. If the viscosity is less than 100 mPa·s, the obtained cured product has insufficient strength. If the viscosity exceeds 500,000 mPa·s, the handling properties of the composition get worse, which is not preferable. In the present invention, the viscosity is a value determined with a rotary viscometer according to the method described in the Japanese Industrial Standards (JIS) K 7117-1: 1999. The degree of polymerization of the organopolysiloxane (A) is a value such that the viscosity at 25 °C is within the aforesaid range.

The number of siloxane units having a fluoroalkyl group (i.e., the value of n) is preferably 10 mol% or more, more preferably 20 mol% or more, and particularly preferably 30 to 100 mol%, relative to a total number of all siloxane units in the molecule, in particular relative to a total number of bifunctional siloxane units that form the main chain (i.e., n + m). The upper limit is not particularly limited, and may be 100 mol% or less, 95 mol% or less, 90 mol% or less, or 80 mol% or less. This range is preferred because with it, excellent hydrocarbon solvent resistance is maintained.

### (B) Organohydrogenpolysiloxane

Component (B) is an organohydrogenpolysiloxane having two or more hydrogen atoms each bonded to a silicon atom per one molecule. The organohydrogenpolysiloxane undergoes a hydrosilylation addition reaction with Component (A) and acts as a curing agent (crosslinking agent). The molecular structure of Component (B) is not particularly limited, and it is possible to use, for example, various types of conventionally produced organohydrogenpolysiloxanes, such as a linear, cyclic, branched, or three-dimensional network (resin-like) structured organohydrogenpolysiloxane.

The organohydrogenpolysiloxane as Component (B) has two or more, generally 2 to 200, preferably 3 to 100, and particularly preferably 3 to 50 hydrogen atoms each bonded to a silicon atom (i.e., a hydrosilyl group represented by SiH) per one molecule. When the organohydrogenpolysiloxane as Component (B) has a linear or branched structure, the SiH groups may be located at only one of either the ends of the molecular chain (i.e., a diorganohydrogensiloxy group) or the middle of the molecular chain (i.e., bifunctional organohydrogensiloxane units or trifunctional hydrogen silsesquioxane units located at non-terminal positions of the molecular chain), or they may be located at both.

Examples of a monovalent organic group bonded to a silicon atom other than the hydrogen atom bonded to a silicon atom include an unsubstituted or substituted monovalent hydrocarbon groups having 1 to 10 carbon atoms, preferably 1 to 8 carbon atoms, that do not contain aliphatic unsaturated bonds, such as alkenyl groups. Examples include alkyl groups such as a methyl, ethyl, propyl, isopropyl, butyl, isobutyl, tert-butyl, pentyl, neopentyl, hexyl, cyclohexyl, octyl, nonyl, or decyl group; aryl groups such as a phenyl, tolyl, xylyl, or naphthyl group; aralkyl groups such as a benzyl, phenylethyl, or phenylpropyl group; and those hydrocarbon groups wherein a part or all of the hydrogen atoms bonded to a carbon atom of these groups is substituted with a substituent such as halogen atoms such as fluorine, bromine, and chlorine; for example, fluoroalkyl groups such as trifluoropropyl groups. Preferred are a methyl group or a fluoroalkyl group such as a trifluoropropyl group. The number of silicon atoms (or the degree of polymerization) per one molecule of Component (B) is preferably 2 to 300, more preferably 3 to 200, and even more preferably 4 to 150.

Component (B) is preferably liquid at room temperature, 25 °C. The viscosity at 25 °C of Component (B) is preferably 0.1 to 1,000 mPa·s, more preferably 0.5 to 500 mPa·s, and even more preferably 1 to 200 mPa·s. If the viscosity is overly low or overly high, workability may be reduced.

Examples of the organohydrogenpolysiloxane (B) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, a methylhydrogensiloxane-dimethylsiloxane cyclic copolymer, methylhydrogenpolysiloxane with both ends blocked with trimethylsiloxy groups, a dimethylsiloxane-methylhydrogensiloxane copolymer with both ends blocked with trimethylsiloxy groups, a methylhydrogensiloxane-trifluoropropylmethylsiloxane copolymer with both ends blocked with trimethylsiloxy groups, dimethylpolysiloxane with both ends blocked with dimethylhydrogensiloxy groups, a dimethylsiloxane-methylhydrogensiloxane copolymer with both ends blocked with dimethylhydrogensiloxy groups, a methylhydrogensiloxane-trifluoropropylmethylsiloxane copolymer with both ends blocked with dimethylhydrogensiloxy groups, trifluoropropyl methyl polysiloxane with both ends blocked with dimethylhydrogensiloxy groups, a dimethylsiloxane-methylhydrogensiloxane copolymer with both ends blocked with dimethylhydrogensiloxy groups, a methylhydrogensiloxane-diphenylsiloxane copolymer with both ends blocked with trimethylsiloxy groups, a methylhydrogensiloxane-diphenylsiloxane-dimethylsiloxane copolymer with both ends blocked with trimethylsiloxy groups, a methylhydrogensiloxane-methylphenylsiloxane-dimethylsiloxane copolymer with both ends blocked with trimethylsiloxy groups, a methylhydrogensiloxane-dimethylsiloxane-diphenylsiloxane copolymer with both ends blocked with dimethylhydrogensiloxy groups, a methylhydrogensiloxane-dimethylsiloxane-methylphenylsiloxane copolymer with both ends blocked with dimethylhydrogensiloxy groups, a copolymer composed of (CH₃)₂HSiO₁/₂, (CH₃)₃SiO_{1/2}, and SiO_{4/2} units, a copolymer composed of (CH₃)₂HSiO_{1/2} and SiO_{4/2} units, a copolymer composed of (CH₃)₂HSiO_{1/2}, SiO_{4/2}, and (C₆H₅)SiO_{3/2} units, and those wherein a part or all of the methyl groups in the compounds exemplified above are substituted with other alkyl groups, phenyl groups, trifluoropropyl groups. One kind of organohydrogenpolysiloxane may be used singly, or two kinds or more may be used in combination.

Component (B) is more preferably represented by the following formula (3).

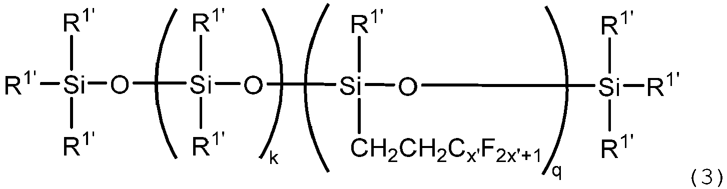

In the formula (3), R¹' is, independently of each other, a hydrogen atom or a group selected from the group consisting of an alkyl group having 1 to 8 carbon atoms, an aryl group having 6 to 12 carbon atoms, and an aralkyl group having 7 to 12 carbon atoms, and examples include the groups exemplified for R¹. This is provided that 2 or more, preferably 3 to 100, and more preferably 3 to 50 of the R^{1'} are hydrogen atoms, x' is an integer of 1 to 10, preferably 1 to 3, and most preferably 1. k is an integer of 2 to 200, preferably an integer of 3 to 100, and more preferably an integer of 5 to 50, while q is an integer of 0 to 200, preferably an integer of 1 to 100, and more preferably an integer of 2 to 100. k + q is 2 to 300, more preferably 3 to 200, and even more preferably 4 to 150.

The amount of Component (B) is such that the ratio of the number of hydrogen atoms bonded to a silicon atom in Component (B) is within the range of 0.5 to 10, and preferably 1 to 5, per one vinyl group bonded to a silicon atom in Component (A). If the amount of Component (B) is less than the aforesaid lower limit, the obtained composition will not be sufficiently cured. Further, if the amount of Component (B) exceeds the aforesaid upper limit, the obtained silicone rubber will have extremely inferior heat resistance. When the later-described vinyl group-containing organosiloxane other than Component (A) is included, it is sufficient that the ratio of the number of hydrogen atoms bonded to silicon atoms in Component (B) to the number of vinyl groups bonded to silicon atoms in the composition satisfies the aforesaid range.

### (C) Addition-reaction catalyst

The addition-reaction catalyst as Component (C) may be any catalyst provided that it promotes the addition reaction between vinyl groups in Component (A) and hydrogen atoms bonded to silicon atoms in Component (B). In general, a platinum group metal-based catalyst is suitably used. Examples include platinum, palladium, rhodium, chloroplatinic acid, alcohol-modified chloroplatinic acid, coordination compounds of chloroplatinic acid and olefins, vinyl siloxanes, or acetylene compounds, tetrakis(triphenylphosphine)palladium, chlorotris(triphenylphosphine)rhodium, and like platinum group metals or compounds thereof; particularly preferred are platinum-based compounds. One kind of Component (C) may be used singly or two kinds or more may be used in combination.

The amount of Component (C) may be an effective amount as a catalyst, but is generally 0.5 to 1,000 ppm, preferably within the range of 1 to 500 ppm, and more preferably within the range of 10 to 100 ppm, based on the amount of Component (A), on a mass basis in terms of catalytic metal elements (platinum group metal elements). When this range is satisfied, the addition reaction proceeds at an appropriate rate and the cured product has good heat resistance.

### (D) Reinforcing silica filler agent

Component (D) is reinforcing silica, a surface of which being treated with a linear organosilicon compound having silanol groups at both ends of the molecular chain and represented by the following formula (2). 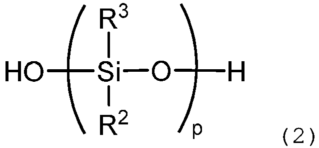 wherein R³ is, independently of each other, a group selected from the group consisting of an alkyl group having 1 to 8 carbon atoms, an aryl group having 6 to 12 carbon atoms, and an aralkyl group having 7 to 12 carbon atoms, and examples include those exemplified for R¹. Preferred is a methyl group. Each R² is a group defined for R³ or 3,3,3-trifluoropropyl groups, provided that at least one R² is a 3,3,3-trifluoropropyl group. p is an integer that satisfies equation 1 <= p <= 20, preferably an integer of 3 to 9.

The reinforcing silica filler agent is essential in the present invention for imparting mechanical strength to the silicone rubber to be obtained. If the organosilicon compound represented by the formula (2) does not have a 3,3,3-trifluoropropyl group, the obtained cured product will be inferior in tensile strength, elongation at break, and compression set.

Since the present composition comprises the reinforcing silica filler agent, a surface of which being treated with a linear organosilicon compound with both ends of the molecular chain blocked with silanol groups, the viscosity of the composition and the compression set of the rubber after heating and curing is reduced.

As the reinforcing silica filler agent, one that has been conventionally used in silicone rubber compositions may be used, and precipitated silica (wet silica), fumed silica (dry silica), calcined silica, and the like are suitable. Fumed silica is particularly suitable.

In Component (D), surface-untreated silica may be surface treated with the organosilicon compound of the formula (2) in advance. Alternatively, surface-untreated silica and a polysiloxane component (i.e., Component (A)) may be kneaded, the organosilicon compound of the formula (2) may be added, and the resulting mixture may be heated and mixed preferably in the presence of a small amount of water to perform surface treatment in the mixture. Further, the surface-untreated silica used in the present invention may preferably be dry silica surface-treated with dimethyldichlorosilane (e.g., Aerosil R-974). It is preferable to further treat the surface of the dry silica surface-treated with dimethyldichlorosilane with the organosilicon compound of the formula (2).

The treatment amount when surface-treating the silica with the organosilicon compound of the formula (2) is such that 40 parts by mass of silica before surface treatment with the organosilicon compound of the formula (2) is preferably surface-treated with 1 to 30 parts by mass, and particularly 2 to 20 parts by mass of the organosilicon compound of the formula (2).

Further, an organosilane or organosilazane other than the organosilicon compound of the formula (2) may be used in combination as a surface treatment agent. Examples of the organosilane include chlorosilanes such as trimethylchlorosilane, dimethyldichlorosilane, dimethylvinylchlorosilane, and trivinylchlorosilane; alkoxysilanes such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, and vinyltris(methoxyethoxy)silane; silazanes such as hexamethyldisilazane, hexamethylcyclotrisilazane, and 1,3-divinyl-1,1,3,3-tetramethyldisilazane; and the like, and preferred among these are hexamethyldisilazane, 1,3-divinyl-1,1,3,3-tetramethyldisilazane, and the like. The treatment amount of an organosilane or an organosilazane is such that 40 parts by mass of surface-untreated silica is treated with preferably 0.1 to 15 parts by mass, particularly 0.1 to 10 parts by mass of organosilane or an organosilazane.

The specific surface area of silica determined by the BET method before surface treatment with the organosilicon compound of the formula (2) is 50 m²/g or more, preferably 100 to 400 m²/g, and more preferably 150 to 350 m²/g. If the specific surface area is smaller than 50 m²/g, not only sufficient strength may not be obtained, but the rubber molded article may also have a poor external appearance. If the specific surface area is larger than 400 m²/g, mixing may be difficult. The specific surface area of surface-treated silica determined by the BET method may also be within the aforesaid range.

The amount of Component (D) is 10 to 60 parts by mass, and preferably 15 to 55 parts by mass, relative to 100 parts by mass of Component (A). If the amount is less than the aforesaid lower limit, the obtained silicone rubber will not have sufficient rubber strength. Further, if the amount exceeds the aforesaid upper limit, mixing Component (D) into the composition will be difficult.

### Other components

The liquid addition-curable fluorosilicone composition of the present invention may contain, as necessary, components other than components (A) to (D) within a range that does not impair the outer appearance of the rubber molded article. Examples of the other components include, for example, conductive agents such as carbon black, conductive zinc white, and metal powder; hydrosilylation reaction control agents such as nitrogen-containing compounds, acetylene compounds, phosphorus compounds, nitrile compounds, carboxylates, tin compounds, mercury compounds, and sulfur compounds; heat resistance-imparting agents such as iron oxide and cerium oxide; compression set improvers such as triazole compounds and benzotriazole derivatives; internal mold release agents such as dimethyl silicone oil; adhesion-imparting agents, thixotropic agents, and the like. This is provided that the liquid addition-curable fluorosilicone composition of the present invention does not contain an isocyanuric acid derivative having three trialkoxy groups per one molecule.

The liquid addition-curable fluorosilicone composition of the present invention may be prepared by uniformly mixing the components (A) to (D) and each optional component as necessary using a general mixing stirrer or kneading device such as a kneader or a planetary mixer.

The composition of the present invention is characterized by being liquid at 23 °C. In terms of workability and the like, the viscosity at 23 °C at a shear rate of 10 s⁻¹ is preferably 1,500 Pa·s or less, more preferably 100 to 1,200 Pa·s, and further preferably 200 to 1,100 Pa·s. If the viscosity exceeds 1,500 Pa·s, it takes time to feed materials when performing injection, compression, and injection molding, which may significantly reduce productivity. In the present invention, the viscosity at the aforesaid shear rate is determined with a precision rotary viscometer, ex Thermo Fisher Scientific.

The liquid addition-curable fluorosilicone composition of the present invention may be formed into a two-pack type composition. In this case, each component may be appropriately divided so that Component (B) as a crosslinking agent and Component (C) as an addition-reaction catalyst are not mixed in the same composition (A liquid or B liquid). For example, a two-pack type composition comprising an A liquid comprising components (A), (C) and (D) and a B liquid comprising components (A), (B) and (D) are prepared, and it is preferably prepared so that these liquids are mixed in an equal mass or volume.

The liquid addition-curable fluorosilicone composition of the present invention may be applied to various molding methods such as cast molding, compression molding, and injection molding. Methods for molding fluorosilicone rubber by cast molding, compression molding, or injection molding will be described in detail below.

In the case of cast molding, the liquid addition-curable fluorosilicone composition is divided into two liquid types: an A liquid and a B liquid. The materials divided into the two liquids, each of the A liquid and the B liquid, are mixed in equal amounts, then the resulting mixture is injected into a metal mold and heated and cured in a constant temperature bath to form a silicone rubber. In the case of compression molding, a metal mold is installed in a compressor such as a press machine, and as in cast molding, the A liquid and the B liquid are mixed in equal amounts, with the resulting mixture injected into the mold and heated and cured to form a silicone rubber. In the case of injection molding, the A liquid and the B liquid are each supplied from a material supply pump to a quantitative meter. The A liquid and the B liquid are combined in equal amounts from the quantitative meter through a material supply line. The materials are mixed at the screw part and the cylinder part of the molding machine body. Thereafter, the resulting mixture is injected into a mold, then heated and cured within the mold to form a silicone rubber.

The curing molding (primary curing) conditions of the liquid addition-curable fluorosilicone composition may be the same as those of known addition reaction-curable silicone compositions, and the composition may be cured and molded by heating at a curing temperature of 80 to 220 °C, and particularly 120 to 200 °C, with a curing time of 3 seconds to 10 minutes, and particularly 5 seconds to 5 minutes. The molded cured product may be subjected to, as necessary, post curing (secondary curing), for example, at 180 to 220 °C for about 30 minutes to 6 hours.

A cured product (silicone rubber) obtained from the liquid addition-curable fluorosilicone composition of the present application has a compression set of 100 or less after compression at 180 °C for 22 hours, as determined according to the description of JIS K 6249: 2003, and a tensile strength of 5.0 MPa or more as mechanical strength. Alternatively, the compression set after compression at a compression ratio of 25% at 180 °C for 22 hours according to JIS K 6249: 2003 is 150 or less, and preferably 100 or less. When the compression set is 100 or less, the cured product may be used as a part (molded body) such as a seal material, O-ring, or packing. As for mechanical strength, in terms of the practical strength of the rubber molded article, the tensile strength is 4.5 MPa or more, and preferably 5.0 MPa or more.

Fluorosilicone rubber molded articles obtained by heating and curing the liquid addition-curable fluorosilicone composition of the present invention have excellent gasoline and oil resistance and, thus, is suitably used as rubber parts for aircrafts and on vehicles, printer parts, and the like. Further, in recent years, such molded articles is also suitably used as mobile parts due to their sebum resistance, and as seal parts for fuel cell vehicles due to their acid resistance.

### EXAMPLES

The present invention will be explained below in further detail with reference to a series of the Examples and the Comparative Examples, though the present invention is in no way limited by these Examples.

The viscosity of Component (A) was determined at 25 °C with a BH-type rotary viscometer (rotor No. 7, number of rotations: 10 rpm). The viscosity of Component (B) was determined at 25 °C with a BL-type rotary viscometer (rotor No. 2, number of rotations: 60 rpm).

The viscosity of the composition was determined by the following manners.

The viscosity of the composition was determined at 23 °C at a shear rate of 10 s⁻¹ by a cone-plate measuring system of a precision rotary viscometer, ex Thermo Fisher Scientific.

The hardness, tensile strength, elongation at break, and tear strength (angle) of the cured product were determined by the following manners.

The composition was press-cured at 150 °C for 10 minutes and further subjected to secondary vulcanization (post-curing) at 200 °C for 4 hours in a constant temperature bath. The hardness, tensile strength, elongation at break, and tear strength (angle) of the cured product were determined according to the description of JIS K 6249: 2003.

The compression set of the cured product was determined by the following method. The composition was cured (press-cured) at 150 °C for 15 minutes and further subjected to secondary vulcanization (post-curing) at 200 °C for 4 hours in a constant temperature bath. The compression set of the cured product after compression at a compression ratio of 25% at 180 °C for 22 hours was determined according to the description of JIS K 6249: 2003.

Each component used in the following Examples and Comparative Example is as shown below.
Component (A): trifluoropropyl methyl polysiloxane with both ends blocked with dimethylvinylsiloxy groups, which is represented by the following formula (4): 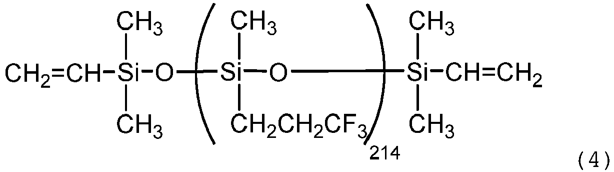 and has a viscosity at 25 °C of 76.6 Pa·s and a vinyl group content of 4.6 × 10⁻⁵ mol/g.
Component (D): fumed silica having a specific surface area of 200 m²/g determined by the BET method (Aerosil R-974, produced by Nippon Aerosil Co., Ltd.), and an organosilicon compound represented by the following formula (5): 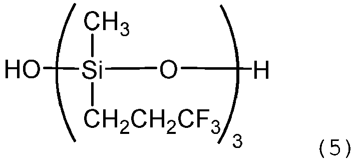
Crosslinking agent (B): methylhydrogenpolysiloxane represented by the following formula (6): 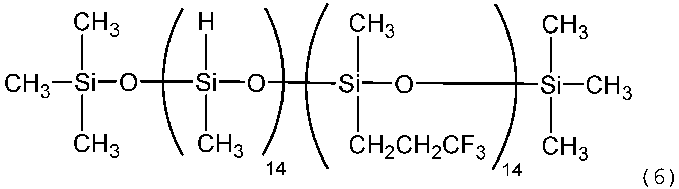 having a viscosity of 0.06 Pa·s and a SiH group content of 0.0049 mol/g.
Platinum catalyst (C) (Pt concentration: 0.5 mass%) Reaction control agent: ethynylcyclohexanol
Compression set improver: benzotriazole silane represented by the following formula (7): 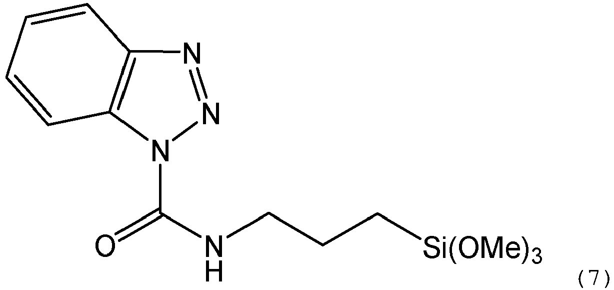
Heat resistance-imparting agent: cerium oxide

### [Example 1]

(A) 65 parts by mass of the trifluoropropyl methyl polysiloxane represented by the formula (4) [vinyl group content: 4.6 × 10⁻⁵ mol/g], 40 parts by mass of the aforesaid fumed silica as a reinforcing silica filler agent, 3.3 parts by mass of the organosilicon compound represented by the formula (5), 0.55 part by mass of water, and 0.3 part by mass of 1,3-divinyl-1,1,3,3-tetramethyldisilazane were mixed at 25 °C for 30 minutes, then the temperature was raised to 160 °C and stirring was continued for 3 hours. Further, 55 parts by mass of the trifluoropropyl methyl polysiloxane represented by the formula (4) were added, followed by mixing for 30 minutes, to obtain a silicone rubber base.

320 parts by mass of the silicone rubber base (the amount of Component (D) is 31.1 parts by mass, relative to 100 parts by mass of Component (A)), 17 parts by mass of the trifluoropropyl methyl polysiloxane represented by the formula (4), 8.3 parts by mass of the methylhydrogenpolysiloxane represented by the formula (6) as the crosslinking agent (B) (wherein the ratio of the number of SiH groups in Component (B) to a vinyl group bonded to a silicon atom in Component (A) [SiH/SiVi] is 2.6), 0.08 part by mass of ethynylcyclohexanol as a reaction control agent, 0.4 part by mass of the platinum catalyst (C) containing 0.5 mass% of Pt, 0.015 part by mass of benzotriazole silane represented by the formula (7) as a compression set improver, and 0.57 part by mass of cerium oxide as a heat resistance-imparting agent were suitably mixed to prepare an addition-curable fluorosilicone composition 1 that is liquid at 23 °C.

The viscosity of the obtained composition 1 was determined according to the aforesaid method. Further, the composition was cured and, then, the hardness, tensile strength, elongation at break, tear strength (angle), and compression set of the cured product were determined according to the aforesaid methods. The results are shown in Table 1.

### [Example 2]

Example 1 was repeated except that the amount of the organosilicon compound represented by the formula (5) was changed to 5.0 parts by mass (wherein the amount of Component (D) is 31.1 parts by mass, relative to 100 parts by mass of Component (A)) in the preparation of the silicone rubber base in Example 1 to prepare an addition-curable fluorosilicone composition 2 that is liquid at 23 °C.

The viscosity of the obtained composition 2 was determined according to the aforesaid method. Further, the composition was cured and, then, the hardness, tensile strength, elongation at break, tear strength (angle), and compression set of the cured product were determined according to the aforesaid methods. The results are shown in Table 1.

### [Example 3]

Example 1 was repeated except that the amount of the organosilicon compound represented by the formula (5) was changed to 6.6 parts by mass (the amount of Component (D) is 31.1 parts by mass, relative to 100 parts by mass of Component (A)) in the preparation of the silicone rubber base in Example 1 to prepare an addition-curable fluorosilicone composition 3 that is liquid at 23 °C.

The viscosity of the obtained composition 3 was determined according to the aforesaid method. Further, the composition was cured and, then, the hardness, tensile strength, elongation at break, tear strength (angle), and compression set of the cured product were determined according to the aforesaid methods. The results are shown in Table 1.

### [Comparative Example 1]

Example 1 was repeated except that the organosilicon compound represented by the formula (5) was not added (the amount of untreated fumed silica is 31.1 parts by mass, relative to 100 parts by mass of Component (A)) in the preparation of the silicone rubber base in Example 1 to prepare an addition-curable fluorosilicone composition 4 that is liquid at 23 °C.

The viscosity of the obtained composition 4 was determined according to the aforesaid method. Further, the composition was cured and, then, the hardness, tensile strength, elongation at break, tear strength (angle), and compression set of the cured product were determined according to the aforesaid methods. The results are shown in Table 1.

**[Table 1]**

| | Example 1 | Example 2 | Example 3 | Comparative Example 1 |
|---|---|---|---|---|
| Viscosity, 10S⁻¹, Pa·s | 1020 | 900 | 810 | 1180 |
| Hardness, Type-A | 54 | 53 | 52 | 58 |
| Tensile strength, MPa | 6.3 | 6.7 | 7.1 | 3.9 |
| Elongation at break, % | 218 | 233 | 235 | 134 |
| Tear strength, angle, kN/m | 14 | 16 | 17 | 12 |
| Compression set, 180 °C/22H, % | 9 | 8 | 6 | 17 |

As shown in Table 1, the cured products obtained from the liquid addition-curable fluorosilicone compositions of the present invention have excellent tensile strength and elongation at break, and low compression set values. On the other hand, the fluorosilicone composition of Comparative Example 1, which used silica not surface-treated with the organosilicon compound of the present invention, had a particularly large compression set and inferior mechanical strength.

The liquid addition-curable fluorosilicone composition of the present invention is suitable as a material for cast molding, compression molding, and injection molding, and contributes to improving the productivity of molded articles. In addition, the liquid addition-curable fluorosilicone composition of the present invention has a low compression set value after heating and curing and is suitably used as a rubber molded article such as a seal material, O-ring, or packing.

## Claims

1. An addition-curable fluorosilicone composition in a form of liquid at 23 °C, comprises
(A) an organopolysiloxane represented by the following general formula (1) and having a viscosity at 25 °C of 100 to 500,000 mPa·s, 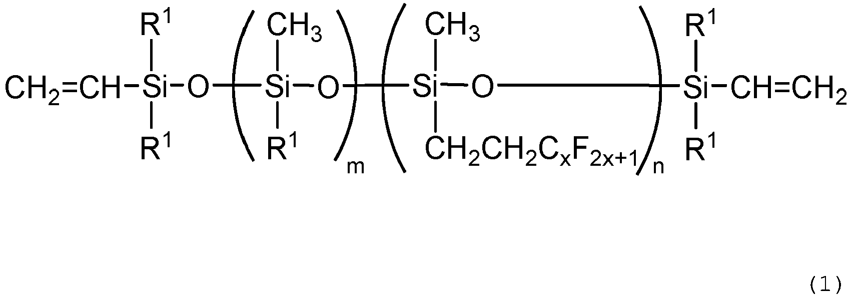 wherein R¹ is, independently of each other, a group selected from the group consisting of an alkyl group having 1 to 8 carbon atoms, an aryl group having 6 to 12 carbon atoms, and an aralkyl group having 7 to 12 carbon atoms, x is an integer of 1 to 10, m is an integer of 0 to 100, and n is an integer of 1 to 800, provided that 5 <= m + n <= 800;
(B) an organohydrogenpolysiloxane having two or more hydrogen atoms each bonded to a silicon atom per one molecule, in an amount such that the number of hydrogen atoms bonded to a silicon atom in Component (B) is 0.5 to 10, per one vinyl group bonded to a silicon atom in Component (A);
(C) an addition-reaction catalyst in a catalytic amount; and
(D) a reinforcing silica filler agent, a surface of which being treated with an organosilicon compound represented by the following general formula (2): 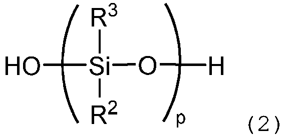 wherein R³ is, independently of each other, a group selected from the group consisting of an alkyl group having 1 to 8 carbon atoms, an aryl group having 6 to 12 carbon atoms, and an aralkyl group having 7 to 12 carbon atoms, R² is, independently of each other, a group defined for R³ or a 3,3,3-trifluoropropyl group, provided that at least one R² is a 3,3,3-trifluoropropyl group, and p is an integer that satisfies equation 1 <= p <= 20, in an amount of 10 to 60 parts by mass, relative to 100 parts by mass of Component (A).

2. The addition-curable fluorosilicone composition according to claim 1, wherein the addition-curable fluorosilicone composition has a viscosity at 23 °C at a shear rate of 10s⁻¹ is 1,500 Pa·s or less.

3. A fluorosilicone rubber composed of a cured product of the addition-curable fluorosilicone composition according to claim 1 or 2.

4. The fluorosilicone rubber according to claim 3, wherein a compression set of the fluorosilicone rubber after compression at 180 °C for 22 hours is 100 or less, as determined according to JIS K 6249: 2003.

5. A molded article comprising the fluorosilicone rubber according to claim 3 or 4.
